# FASCICULE DE BREVET EUROPEEN

(11) **EP 1 955 100 B1**
(45) Date de publication et mention de la délivrance du brevet: **02.05.2012**
(21) Numéro de dépôt: 06842045.4
(22) Date de dépôt: 27.11.2006
(51) Int. Cl.: G02B 5/08, G02B 7/192, G02B 7/18

(54) **INSTRUMENT OPTIQUE COMPRENANT UNE CAVITE D'ENTREE DANS LAQUELLE EST PLACE UN MIROIR**
OPTISCHES INSTRUMENT MIT EINER EINGABEVERTIEFUNG, IN DIE EIN SPIEGEL EINGELASSEN IST
OPTICAL INSTRUMENT COMPRISING AN INPUT CAVITY WHEREIN IS ARRANGED A MIRROR

(30) Priorité: 28.11.2005 FR 0553620
(43) Date de publication de la demande: 13.08.2008
(73) Titulaire: THALES, 92200 Neuilly sur Seine (FR)
(72) Inventeur: CHANAL, Olivier, F-83440 Tanneron (FR); VALENTINI, David, F-06110 Lecannet (FR); DEVILLIERS, Christophe, F-06130 Grasse (FR)
(74) Mandataire: Esselin, Sophie
(86) Numéro de dépôt international: PCT/FR2006/051234
(87) Numéro de publication internationale: WO 2007/060376

(56) Documents cités:
- EP-B- 0 676 838
- US-A- 6 066 850
- US-A- 6 101 015
- US-A1- 2003 112 512

## Description

L'invention concerne un instrument optique comprenant une cavité d'entrée dans laquelle est placé un miroir dit miroir primaire.

L'invention s'applique à tout instrument optique comprenant un miroir nécessitant une très grande stabilité thermique, pour limiter les déformées thermo-élastiques, en particulier sur de courtes périodes par exemple une à deux heures.

L'invention s'applique tout particulièrement mais non exclusivement aux instruments optiques utilisés dans le domaine spatial tels que les instruments optiques embarqués sur des satellites (typiquement des télescopes).

En effet, certains instruments optiques tels que les télescopes nécessitent une très grande stabilité géométrique à température ambiante de leur miroir primaire, aussi bien à long terme qu'à court terme.

Avec l'utilisation de nouveaux matériaux céramiques (à base de carbure de silicium : CeSiC, SiC, ...) pour la réalisation de miroirs, cette contrainte se traduit entre autre, par une stabilité thermique élevée en terme de variation de gradient dans l'épaisseur du miroir et en terme de fluctuation de température de la face active. Ces miroirs dits miroirs primaires, situés dans une cavité d'entrée de l'instrument, sont soumis directement ou indirectement aux variations de flux externes (solaire, terrestre ou albédo) sur l'orbite, et tout au long de l'année.

Jusqu'à présent, la régulation thermique de tels miroirs a été assurée par une régulation active de type radiatif en face arrière. La régulation dite active est réalisée classiquement par des réchauffeurs pilotées par thermostats ou par logiciels embarqués couplés à des thermistances. Ce type de régulation permet de maintenir la température du miroir à un niveau défini et de compenser les variations de flux absorbés par la face avant au cours de l'année. En revanche, ce type de régulation ne permet pas de compenser les fluctuations orbitales dans le cadre de satellite en orbite basse, en raison du mode d'échange purement radiatif entre les réchauffeurs et le miroir.

D'autres solutions, de type optique active, existent mais sont coûteuses et complexes à mettre en oeuvre du fait de l'emploi d'une électronique dédiée et de tests fonctionnels complexes au sol, et elles présentent un risque de panne.

Les documents US-A1-2003/0112512 et JP-A-09133872 divulgent des telescopes spatiales embarqués sur des satellites. Le document WO-A2-01/65297 divulge une telescope terrestielle.

Les telescopes des documents US-A1-2003/0112512 et WO-A2-01/65297 comprennent une cavité d'entrée comprenant une enveloppe interne rigide autour du miroir primair et un deuxième enveloppe constituée d'un matériel isolant thermique disposé sur tout le périmétre de la cavité.

Une régulation thermique directe de la face active permettrait d'obtenir un niveau de stabilité du miroir équivalent, mais cette solution est, à la connaissance du déposant, non réalisée et présenterait des risques de déformation thermo-élastique.

La présente invention a pour but de résoudre ce problème.

En effet, l'invention propose une solution au problème de très grande stabilité thermique demandée au niveau du miroir primaire d'un instrument optique. Elle a pour but d'apporter une solution vis à vis notamment de fluctuations de courtes périodes dans le cas d'instruments optique de satellites d'orbite basse à géostationnaire.

La solution proposée consiste à réaliser une cavité d'entrée de l'instrument comprenant une enveloppe rigide créant une inertie thermique de tout ou partie de la cavité.
L'inertie thermique de cette enveloppe, située à proximité immédiate du miroir primaire où les échanges radiatifs sont les plus importants, permet de limiter les fluctuations de température de la cavité et, par conséquent, les fluctuations de température du miroir.

La présente invention a plus particulièrement pour objet un instrument optique comprenant au moins un miroir dit miroir primaire (3), placé dans une cavité (2), le miroir primaire comportant une face active susceptible d'être soumise à des variations instantanées du flux radiatif incident, où la cavité comporte une enveloppe interne rigide (20) autour du miroir constituant au moins une partie de la cavité, cette enveloppe étant constituée d'un matériau présentant une inertie thermique de manière à amortir les variations instantanées du flux radiatif incident permettant ainsi de limiter les fluctuations de température de cette cavité et, par conséquent, les fluctuations de température du miroir.

Pour limiter la masse de l'instrument, l'enveloppe interne rigide s'étend sur une première partie de la cavité définie comme étant à proximité du miroir, cette partie allant du miroir jusqu'à une distance d inférieure à la longueur 1 totale de la cavité d'entrée de l'instrument.

La première enveloppe est en d'aluminium ou tout autres matériaux présentant une forte inertie thermique (ex. : Béryllium).

Avantageusement, l'enveloppe en aluminium a une épaisseur d'environ 1mm.

Selon une autre caractéristique, la cavité comporte en outre une deuxième enveloppe constituée d'un matériau isolant thermique disposé sur tout le périmètre de la cavité et au fond de cette dernière c'est-à-dire derrière le miroir.

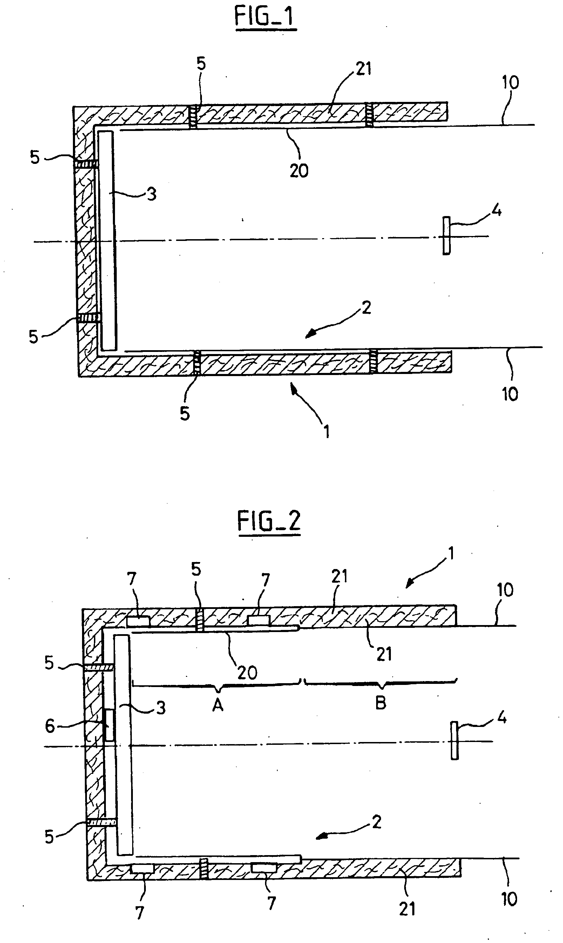

La deuxième enveloppe recouvre la première et prolonge cette première partie de cavité pour former une deuxième partie en continuité avec la première (figure 2).

Avantageusement, la deuxième enveloppe est constituée d'une structure multicouche isolante (MLI).

Selon une autre caractéristique, l'instrument comprend en outre des moyens actifs de contrôle de la température du miroir.

L'invention s'applique à des télescopes à bord de satellites quelle que soit la taille de leur miroir primaire.

D'autres particularités et avantages de l'invention apparaîtront clairement à la lecture de la description qui est faite ci-après et qui est donnée à titre d'exemple illustratif et non limitatif et en regard des dessins sur lesquels :
- la figure 1 représente une coupe longitudinale d'un instrument optique
- la figure 2 représente une coupe longitudinale de l'instrument optique selon un mode de réalisation.

L'instrument 1 décrit comporte une cavité 2 permettant de recevoir le miroir 3, dit miroir primaire, et de le fixer à l'instrument par des moyens de fixation 5 classiques. Généralement le miroir est dans une cavité tubulaire d'un diamètre légèrement supérieur au sien de manière à venir en périphérie de ce miroir. Le miroir 3 est centré dans la cavité et sa face active tournée vers l'entrée de la cavité lieu d'emplacement d'un miroir secondaire 4.

Dans l'état de la technique la cavité est réalisée par une enveloppe d'isolation thermique réalisée par une couverture d'isolation dite multicouche MLI (Multi Layered Insulation) peinte en noir coté interne à la cavité et qui présente de fortes variations de température.

Plutôt que d'utiliser une enveloppe d'isolation classique, la solution proposée consiste à utiliser une cavité d'entrée pour l'instrument d'optique 1 ayant une forte inertie thermique. Pour cela la cavité 2 comprend au moins une partie dans un matériau à forte inertie vis-à-vis des fluctuations rapides de températures. Ainsi, la cavité d'entrée de l'instrument réalisée conformément à l'invention est moins sensible aux fluctuations externes, notamment vis à vis des fluctuations rapides de type orbitales.

A cette fin, la cavité d'entrée 2 de l'instrument optique 1 comprend une enveloppe interne rigide 20 autour du miroir 3 constituée d'un matériau présentant une inertie thermique amortissant les variations instantanées du flux radiatif incident. L'enveloppe à inertie thermique limite les fluctuations de température de la cavité et, par conséquent, les fluctuations de température du miroir.

L'enveloppe rigide à inertie thermique 20 se présente sous forme tubulaire et constitue partie de la cavité d'entrée de l'instrument d'optique 1.

Sur le schéma de la figure 1, l'enveloppe 20 constitue toute la cavité 2. Dans ce cas, la longueur de l'enveloppe 20 correspond à celle de la cavité d'entrée 2. L'enveloppe va dans ce cas, du miroir primaire 3 jusqu'à l'entrée de la cavité qui correspond à l'emplacement du miroir secondaire 4.

Pour des raisons de limitation de la masse de l'instrument optique, l'enveloppe 20 aura de préférence une longueur inférieure à celle de la cavité d'entrée tout en restant suffisamment longue pour assurer sa fonction d'amortisseur des variations instantanées du flux radiatif incident. Cet exemple de réalisation est illustré par le schéma de la figure 2, l'enveloppe 20 constituant une partie seulement de la cavité 2.

Le diamètre de l'enveloppe 20 est légèrement supérieur à celui du miroir primaire 3 de manière à ce que cette dernière puisse être placée en périphérie du miroir 3.

La partie de cavité présentant une inertie thermique ou la totalité de la cavité présentant cette inertie thermique par rapport aux fluctuations thermiques est recouverte d'une enveloppe d'isolation thermique 21 de type multicouche « MLI ».

Seulement une partie de la cavité comprend une enveloppe rigide à inertie thermique tel que représenté sur la figure 2, et l'enveloppe d'isolation 21 recouvrant cette partie de cavité, s'étend sur toute la longueur de la cavité d'entrée, sa surface interne étant dans le prolongement de la surface interne de l'enveloppe à inertie thermique 20.

Un matériau tel que l'aluminium présentant une forte capacité calorifique ainsi qu'une bonne conductibilité thermique, peut être utilisé avantageusement pour réaliser l'enveloppe à inertie thermique.

La face interne de la partie A de cavité réalisée en aluminium 20 est peinte en noir pour des raisons optiques, et la face externe est isolée de l'instrument 1 avec l'enveloppe 21 multicouche isolante de type MLI afin de maintenir un niveau de température suffisamment bas permettant la régulation du miroir aux alentour de 20°C.

Selon le besoin, la solution proposée peut être encore améliorée avec des moyens 6 et 7 illustrés sur la figure 2, classiquement utilisés pour le contrôle de la température à savoir :
1) un contrôle actif 7 de la température de l'enveloppe rigide à l'aide d'une régulation de type Proportionnel-Intégral-Dérivée, par exemple, ce qui permet de diminuer encore les fluctuations thermiques de l'enveloppe et donc du miroir.
2) l'association d'une régulation active du miroir en face arrière de type radiatif 6 qui devient, avec la présence de la cavité à forte inertie thermique, nettement plus efficace pour compenser des fluctuations de courte durée, de type orbitale. Ceci est du au fait que les variations instantanées du flux radiatif provenant de la cavité proche sont amorties, en raison de l'inertie de la cavité, par rapport aux variations provenant d'une cavité comprenant seulement une isolation de type MLI.
3) l'association d'une régulation active du miroir en face arrière de type radiatif, dont la boucle d'asservissement est pilotée par la température de la cavité, permettant ainsi d'anticiper et de compenser les fluctuations de température du miroir.

A titre d'exemple une modélisation thermique d'un ensemble comprenant :
1 miroir primaire 3 de diamètre 1,3m
- la cavité 2 étant munie d'une enveloppe rigide en aluminium 20 d'environ 1mm sur la moitié A de la longueur soit une longueur 1,2m,
- la cavité 2 étant recouverte d'une enveloppe d'isolation 21 de type MLI recouvrant l'enveloppe d'aluminium et prolongeant l'enveloppe 20 pour constituer l'autre moitié B de la cavité,

1 miroir secondaire 4
1 baffle d'entrée 10,
a permis, pour un satellite en orbite basse, de quantifier les gains obtenus selon l'invention :

| Structure de la cavité de l'instrument optique. | Variation orbitale de la température moyenne du miroir primaire (face active) | Variation orbitale du gradient thermique dans l'épaisseur du miroir primaire |
|---|---|---|
| | (mK) | (mK) |
| Classique (cavité recouverte de MLI) | 310 | 12,4 |
| Moitié de la cavité avec enveloppe interne rigide en aluminium, non régulée | 110 | 4,8 |
| Moitié de la cavité avec enveloppe interne en aluminium, régulée | 90 | 3,6 |
| Régulation active du miroir (type radiatif) et moitié de la cavité avec enveloppe interne en aluminium (non régulée) | 16 | 1,7 |

Ainsi, la modification de la structure de la cavité d'entrée de l'instrument optique proposée permet d'atténuer les variations de flux incidents vues par la face active du miroir, et notamment les flux provenant de la cavité proche.

Une cavité comprenant une enveloppe tubulaire en aluminium de 1,2m de long et 1mm d'épaisseur dans l'environnement proche du miroir primaire de 1,3m de diamètre suffit pour obtenir ces résultats.

Une optimisation de la longueur de l'enveloppe rigide est nécessaire en fonction des exigences de stabilité demandées et du surcroît de masse généré.

## Revendications

1. Instrument optique comprenant au moins un miroir dit miroir primaire (3), placé dans une cavité (2), le miroir primaire comportant une face active susceptible d'être soumise à des variations instantanées du flux radiatif incident, la cavité comportant une enveloppe interne rigide (20) autour du miroir constituant au moins une partie de la cavité, cette enveloppe étant constituée d'un matériau présentant une inertie thermique en aluminium ou tout autres matériaux présentant une forte inertie thermique par exemple en Béryllium de manière à amortir les variations instantanées du flux radiatif incident permettant ainsi de limiter les fluctuations de température de cette cavité et, par conséquent, les fluctuations de température du miroir. **Caractérisé en ce que** : l'enveloppe interne rigide s'étendant sur une première partie (A) de la cavité définie comme étant à proximité du miroir, cette partie allant du miroir jusqu'à une distance d inférieure à la longueur 1 totale de la cavité,
et
la cavité comporte en outre une deuxième enveloppe (21) constituée d'un matériau isolant thermique disposé sur tout le périmètre de la cavité et au fond de cette dernière c'est-à-dire derrière le miroir, la deuxième enveloppe recouvrant la première et prolongeant la première partie (A) de la cavité pour former une deuxième partie (B) en continuité avec la première.

2. Instrument optique selon la revendication 1, **caractérisé en ce que** la première enveloppe (20) a une épaisseur d'environ 1mm.

3. Instrument optique selon l'une des revendications 1 ou 2, **caractérisé en ce que** la deuxième enveloppe (21) est constituée d'une structure multicouche isolante (MLI).

4. Instrument optique selon l'une quelconque des revendications précédentes **caractérisé en ce qu'**il comprend en outre des moyens (6) et (7) actifs de contrôle de la température du miroir et de l'enveloppe rigide.

## Claims

1. An optical instrument comprising at least one mirror, referred to as the primary mirror (3), arranged in a cavity (2), said primary mirror comprising an active surface that is susceptible to be subject to instantaneous variations of the incident radiation flux, said cavity comprising an internal rigid envelope (20) around said mirror, which constitutes at least part of said cavity, said envelope being made from material with thermal inertia, such as aluminium or any other materials with high thermal inertia, for example, beryllium, so as to absorb the instantaneous variations of the incident radiation flux, thus allowing the temperature fluctuations in said cavity and, consequently, the temperature fluctuations of said mirror to be limited, **characterised in that** the internal rigid envelope extends along a first part (A) of said cavity that is defined as being within the vicinity of said mirror, said part extending from said mirror up to a distance d that is less than the total length 1 of said cavity, and
said cavity further comprises a second envelope (21) that is constituted by a thermal insulating material that is arranged over the entire perimeter of said cavity and at the bottom of said cavity, that is behind said mirror, said second envelope covering the first envelope and extending the first part (A) of said cavity so as to form a second part (B) that is continuous with the first part.

2. The optical instrument according to claim 1, **characterised in that** the first envelope (20) is approximately 1mm thick.

3. The optical instrument according to any one of claims 1 to 2, **characterised in that** the second envelope (21) is made from a multi-layer insulation structure (MLI).

4. The optical instrument according to any one of the preceding claims, **characterised in that** it further comprises active means (6) and (7) for controlling the temperature of the mirror and of the rigid envelope.

## Patentansprüche

1. Optisches Instrument, das wenigstens einen Spiegel umfasst, primärer Spiegel (3) genannt, der in einer Kammer (2) angeordnet ist, wobei der primäre Spiegel eine aktive Fläche aufweist, die für momentane Variationen des einfallenden Strahlungsflusses anfällig ist, wobei die Kammer eine interne starre Einhausung (20) um den Spiegel herum umfasst, die wenigstens einen Teil der Kammer bildet, wobei diese Einhausung aus einem thermisch trägen Material wie Aluminium oder einem anderen Materialien mit hoher thermischer Trägheit wie zum Beispiel Beryllium gebildet sein kann, um die momentanen Variationen des einfallenden Strahlungsflusses zu dämpfen, so dass die Temperaturschwankungen dieser Kammer und demzufolge die Temperaturschwankungen des Spiegels begrenzt werden können, **dadurch gekennzeichnet, dass** die interne starre Einhausung über einen ersten Teil (A) der Kammer verläuft, der als in der Nähe des Spiegels liegend definiert ist, wobei sich dieser Teil von dem Spiegel bis zu einer Distanz d erstreckt, die geringer ist als die Gesamtlänge 1 der Kammer, und
die Kammer ferner eine zweite Einhausung (21) umfasst, die von einem Wärmeisoliermaterial gebildet wird, das über den gesamten Umfang der Kammer und am Boden der Kammer, d.h. hinter dem Spiegel, gebildet wird, wobei die zweite Einhausung die erste Einhausung bedeckt und den ersten Teil (A) der Kammer verlängert, um einen zweiten Teil (B) zu bilden, der mit dem ersten Teil fortlaufend ist.

2. Optisches Instrument nach Anspruch 1, **dadurch gekennzeichnet, dass** die erste Einhausung (20) etwa 1 mm dick ist.

3. Optisches Instrument nach Anspruch 1 oder 2, **dadurch gekennzeichnet, dass** die zweite Einhausung (21) aus einer mehrlagigen Isolierstruktur (MLI) gefertigt ist.

4. Optisches Instrument nach einem der vorherigen Ansprüche, **dadurch gekennzeichnet, dass** es ferner aktive Mittel (6) und (7) zum Regeln der Temperatur des Spiegels und der starren Einhausung umfasst.
